# EUROPÄISCHE PATENTSCHRIFT

(11) **EP 1 118 792 B1**
(45) Veröffentlichungstag und Bekanntmachung des Hinweises auf die Patenterteilung: **18.08.2004**
(21) Anmeldenummer: 00127778.9
(22) Anmeldetag: 19.12.2000
(51) Int. Cl.: F16F 1/393

(54) **Gelenklager, insbesondere zur Lagerung von Achslenkern in Kraftfahrzeugen**
Articulated bearing, in particular for the axle guide of a motor vehicle
Palier à rotule, en particulier pour le montage de guides d'essieu de véhicules

(30) Priorität: 22.01.2000 DE 10002746
(43) Veröffentlichungstag der Anmeldung: 25.07.2001
(73) Patentinhaber: Jörn ELZA GmbH, 71336 Waiblingen (DE)
(72) Erfinder: Zawadzki, Bernd, 71404 Korb (DE); Mursinsky, Jörg, 71364 Winnenden (DE); Stummer, Josef, 85716 Unterschleissheim (DE); Nickels, Thomas, 81541 München (DE); Geidober, Manfred, 83564 Soyen (DE)
(74) Vertreter: Neubauer, Hans-Jürgen, Dipl.-Phys.

(56) Entgegenhaltungen:
- EP-A- 0 147 662
- EP-A- 0 148 073
- AT-B- 365 751
- DE-A- 3 906 079
- DE-A- 4 033 805
- DE-A- 19 627 753
- FR-A- 1 574 101
- FR-A- 2 692 948

## Beschreibung

Die Erfindung betrifft ein Gelenklager, insbesondere zur Lagerung von Achslenkem in Kraftfahrzeugen nach dem Oberbegriff des Anspruchs 1.

Ein bekanntes, gattungsgemäßes Gelenklager zur Lagerung von Achslenkern in Kraftfahrzeugen (DE 196 27 753 C2) besteht aus einem um eine Lagerachse rotationssymmetrischen, metallischen Lagerinnenteil als erstem Lagerteil, das im wesentlichen eine ballige Verdickung als Doppel-Konus-Form aufweist mit Lagerinnenteil-Konusbereichen an gegenüberliegenden Endbereichen und mit einer Lagerinnenteil-Mittenzylinderform im Bereich der Längsmitte.

Weiter besteht das bekannte Gelenklager aus einem metallischen Lagergehäuse als zweitem Lagerteil, das einen zylindrischen Innenraum als Aufnahmeauge und Axial-Spannelemente aufweist.

Zudem umfasst das bekannte Gelenklager eine Elastomerschicht, die zwischen dem Lagerinnenteil und dem Lagergehäuse unter Vorspannung angebracht ist dergestalt, dass Relativbewegungen molekular in der Elastomerschicht aufnehmbar sind.

Konkret sind hier zwei gleiche, der Doppel-Konus-Form des einstückigen Lagerinnenteils angepasste und in der Lagerlängsmitte angrenzende Elastomer-Metall-Halbschalen mit jeweils einer Elastomerschicht vorgesehen. Die Vorspannung wird hier durch axiales Zusammenspannen der Elastomer-Metall-Halbschalen im Lagergehäuse aufgebracht, wobei der vorgespannte Zustand im Lagergehäuse durch die Axial-Spannelemente in der Art einer Gehäuseschulter und eines Seegerrings gesichert wird.

Dieses Gelenklager ist in allen Radialrichtungen gleich aufgebaut, so dass die radiale Vorspannung in allen Radialrichtungen gleich ist.

Das vorstehende Gelenklager wird in Verbindung mit den bisher üblichen Achslenkern bei Nutzfahrzeugen in der Art stehend angebrachter Flachstahllenker verwendet, die ein jeweils am Lenkerende gerolltes und um 90° verdrehtes Aufnahmeauge aufweisen. Solche Flachstahllenker werden insbesondere bei Nutzfahrzeugen in Verbindung mit zusätzlichen Stabilisierungs- und Dämpfungselementen eingesetzt. Neuere Gusslenker sind dagegen biegeund verwindungssteifer, wodurch damit die vorstehend genannten Gelenklager weniger geeignet sind. Zudem wird angestrebt, die zusätzlich in der Gesamtanordnung bisher erforderlichen Stabilisierungs- und Dämpfungselemente wegfallen zu lassen und deren Funktion im Gelenklager zu integrieren.

Weiter ist ein vorgespanntes, zylindrisches Lager bekannt (DE-OS 28 16 742), bei dem zwischen dem Lagerinnenteil und dem Lageraußenteil nur in bestimmten Winkelsegmenten Elastomerschichten angebracht sind, so dass in unterschiedlichen radialen Richtungen entsprechend unterschiedliche radiale Federkennungen vorliegen. Solche einfachen Lager ohne weitere Funktion sind für die Lagerung insbesondere von Achslenkern nur bedingt geeignet.

Weiter ist aus der DE 41 27 092 C1 ein Gelenklager mit einer zylindrischen Gelenkbuchse bekannt, die einen umlaufenden Elastomer-Anschlag im mittleren Bereich eines Lagerinnenteils aufweist. Die Gelenkbuchse ist hier nur radial durch Einpressen in ein Lagerauge vorgespannt. Der Einpressvorgang ist hier ferner nur aufwendig mittels eines Montagerohrs durchführbar mit dem auch der Elastomer-Anschlag zusammenwirkt. Durch die zylindrische Ausführung sind unterschiedliche Anwendungen gegenüber einem Doppel-Konus-Lager gegeben.

Aufgabe der Erfindung ist es, ein gattungsgemäßes Gelenklager so weiterzubilden, dass die Einsatz- und Anpassungsmöglichkeiten vergrößert werden und insbesondere ein geeignetes Gelenklager für Schmiede- oder Gusslenker an Kraftfahrzeugen geschaffen wird.

Diese Aufgabe wird mit den Merkmalen des Anspruchs 1 gelöst.

Gemäß Anspruch 1 ist das Lagerinnenteil im Bereich der Lagerinnenteil-Mittenzylinderform in einer quer zur Lagerinnenteil-Längsachse verlaufenden Trennebene in zwei miteinander in einer Anlageverbindung fest und verdrehsicher verbindbare Lagerinnenteil-Konuselemente geteilt, die vorzugsweise als Gleichteile ausgebildet sind und entsprechend jeweils einen Lagerinnenteil-Konusbereich und eine Lagerinnenteil-Mittenzylinderform aufweisen. Die Elastomerschicht umfasst jeweils einen direkt an die Lagerinnenteil-Konusbereiche angehafteten, vorzugsweise anvulkanisierten Elastomer-Konusbereich und einen auf der Lagerinnenteil-Mittenzylinderform angehafteten, vorzugsweise anvulkanisierten Elastomer-Anschlag. Zudem ist an der Außenkontur jedes Elastomer-Konusbereichs eine stabile Außenschale angehaftet, vorzugsweise anvulkanisiert, die eine zylindrische Außenform aufweist und mit einer Innenkontur an die Außenkontur des Elastomer-Konusbereichs angepasst ist. Die Außenschale ist wenigstens mit dem Außenkontur-Teilbereich formschlüssig in den zylindrischen Innenraum des Lagergehäuses eingepresst und zwischen der Außenkontur des Elastomer-Anschlags und einem diesem zugeordneten Zylinderwandbereich des Lagergehäuse-Innenraums ist wenigstens in Teilbereichen ein Luftspalt als freier Federweg ausgebildet, so dass bei einer radialen Auslenkung in Richtung des Luftspalts größer als der Spaltabstand ein Anschlag mit einem sprunghaften Anstieg der Federkennung erfolgt.

Damit wird ein Gelenklager geschaffen, das gute Führungseigenschaften aufweist und in Abhängigkeit vom Spaltabstand mit unterschiedlichen Federkennungen in unterschiedlichen Radialrichtungen ausgeführt werden kann. Vorteilhaft können hierdurch somit sämtliche Bewegungen, insbesondere auch kardanische Bewegungen gezielt abgestützt und aufgenommen werden.

Vorteilhaft lässt sich mit einem derartigen Aufbau erreichen, dass übliche fahrbahnangeregte Schwingungen mit relativ geringer Federkennung weich abgestützt werden und erst extremere, fahrbahnangeregte Stöße über einen Anschlag des Elastomer-Anschlags am zugeordneten Zylinderwandbereich abgefangen werden, so dass Belastungen reduziert und der Fahrkomfort erhöht werden. Desweiteren hat das Gelenklager gute Quer- und Längsführungseigenschaften. Aufgrund der speziellen Ausgestaltung des erfindungsgemäßen Gelenklagers, können je nach den Gegebenheiten bisher übliche Stabilisierungs- und Dämpfungselemente wegfallen und eingespart werden. Weiter vorteilhaft kann ein derartig aufgebautes Gelenklager einfach und schnell an unterschiedliche Einbausituationen angepasst und einfach in bestehende Serienproduktionen integriert werden kann.

Des weiteren wird durch die Teilung des Lagerinnenteils in zwei als Gleichteile ausgebildete Lagerinnenteil-Konuselemente vorteilhaft auch die Herstellung und Montage wesentlich vereinfacht und damit auch kostengünstiger. Dies beruht zum einen auf der gießtechnisch, insbesondere formentechnisch einfachen Herstellbarkeit der Lagerinnenteil-Konuselemente auf die zugleich die Elastomerschicht jeweils direkt anvulkanisierbar ist. Zum anderen wird hier auch die Bauteilvielfalt reduziert, da gegenüber dem gattungsgemäßen Stand der Technik keine auf einen einstückigen Lagerinnenteil-Doppelkonus von beiden Seiten her aufsteckbare Elastomer-Metall-Halbschalen mehr benötigt werden.

Grundsätzlich kann der Elastomer-Anschlag z. B. durch ein noppenartiges Einzelelement oder auch durch mehrere voneinander beabstandete Einzelelemente gebildet sein. In einer besonders bevorzugten Ausführungsform wird nach Anspruch 2 ein umlaufender Elastomer-Anschlag als Elastomer-Mittenzylinderform mit einem zugeordneten umlaufenden Luftspalt beansprucht, so dass die Anschlagwirkung in allen Radialrichtungen ausbildbar ist.

In einer besonders bevorzugten Ausführungsform ist nach Anspruch 3 vorgesehen, dass die Elastomer-Mittenzylinderform und/oder der dieser zugeordnete Zylinderwandbereich des Lagergehäuse-Innenraums so ausgebildet ist, dass Bereiche mit unterschiedlichen Spaltabständen zwischen der Elastomer-Mittenzylinderform und dem Zylinderwandbereich ausbildbar sind. Damit lassen sich je nach den gegebenen Erfordernissen z. B. Längs- und Hochrichtungsanschläge mit unterschiedlichen freien Federwegen ausbilden, was zu einer erhöhten Flexibilität bei der gezielten Auslegung eines Gelenklagers führt.

Nach Anspruch 4 ist vorgesehen, dass die Elastomer-Mittenzylinderform zumindest in Teilbereichen mit dem Elastomer-Konusbereich verbunden ist, was insbesondere beim Vulkanisiervorgang vorteilhaft ist, wobei im Übergangsbereich zwischen der Elastomer-Mittenzylinderform und dem Elastomer-Konusbereich eine radial umlaufende Elastomernut ausgebildet ist. Mit einer derartigen umlaufenden Elastomernut wird eine zweckmäßige Entkopplung zwischen der Wirkung der Elastomer-Mittenzylinderform und der angrenzenden Elastomerschichten erreicht.

Mit den Merkmalen des Anspruchs 5 wird am Lagerinnenteil und vorzugsweise auch entsprechend an der Elastomerschicht für weitere Anpassungen und Dimensionierungen eine weitere Seitenzylinderform anschließend an den Konusbereich vorgesehen.

Gemäß Anspruch 6 weist die Elastomerschicht im Elastomer-Konusbereich und in der Elastomer-Seitenzylinderform an radial gegenüberliegenden Bereichen jeweils in einer axialen Draufsicht eine winkelsegmentförmige Elastomer-Aussparung auf. Vorteilhaft ergibt sich hier eine winkelabhängige Einstellmöglichkeit der Federkennung im Gelenklager.

In einer besonders bevorzugten Ausführungsform nach Anspruch 7 ist der Elastomerzwischenbereich durch wenigstens ein, seiner Kontur folgendes, eingeformtes Zwischenrohr mehrlagig, vorzugsweise zweilagig mit jeweils in etwa gleicher Schichtdicke ausgebildet. Dieses oder weitere Zwischenrohre stabilisieren Relativbewegungen in der Elastomerschicht.

Nach Anspruch 8 ist der Übergangsbereich zwischen einer Zwischenrohr-Mittenzylinderform und einem Zwischenrohr-Konusbereich durch dünne Verbindungsstege gebildet. Vorteilhaft wird damit erreicht, dass die einzelnen Zwischenrohrteile während der gesamten Vulkanisationsvorbereitung zusammenhängen. Die Verbindungsstege dürfen und sollen für eine Entkopplung jedoch bereits während der Montage bzw. während des Betriebs brechen, wobei die Funktion des Lagers hierdurch nicht beeinträchtigt wird.

Weiter kann nach Anspruch 9 vorgesehen sein, dass wenigstens in der Zwischenrohr-Mittenzylinderform wenigstens eine Materialschwächung als Sollbruchstelle ausgebildet ist, die vorzugsweise durch Ausnehmungen und/oder durchgehende Schlitze gebildet ist. Damit kann ein ungünstiger "Knallfrosch"-Effekt vermieden werden.

Nach Anspruch 10 erstreckt sich das Zwischenrohr in etwa über die axiale Länge des Elastomerzwischenbereichs und weist an radial gegenüberliegenden Bereichen jeweils in einer Draufsicht eine winkelsegmentförmige Zwischenrohr-Aussparung im Bereich einer Zwischenrohr-Seitenzylinderform und einem Zwischenrohr-Konusbereich auf, die den Elastomer-Aussparungen zugeordnet sind.

In einer weiteren bevorzugten Ausführungsform ist nach Anspruch 11 vorgesehen, dass die Lagerinnenteil-Konuselemente an den einander zugeordneten Stirnseiten durch eine Reibschluss- und/oder Formschlussverbindung, vorzugsweise eine Steckverbindung, verdrehsicher und radial abgestützt verbindbar sind.

In einer konkreten Ausführungsform ist nach Anspruch 12 vorgesehen, dass jedes Lagerinnenteil-Konuselement an den einander zugeordneten Stirnseiten in einer ersten Stirnseitenhälfte wenigstens eine Nut aufweist und radial gegenüberliegend an einer zweiten Stirnseitenhälfte wenigstens ein Zapfen als Gegenstück zu dieser Nut vorgesehen ist. Mit einem derartigen Aufbau wird erreicht, dass zwei miteinander zu verbindende Lagerinnenteil-Konuselemente für ein Zusammenfügen um 180° gegeneinander verdreht werden können, so dass jeweils ein Zapfen einer Nut zugeordnet, um eine form- und reibschlüssige Verbindung der beiden Lagerinnenteile zu erreichen. Vorteilhaft ist hier der Zapfen mit einem Übermaß gegenüber der zugeordneten Nut ausgebildet, wodurch ein Presssitz gebildet wird.

In einer einfach herzustellenden, konkreten Ausführungsform können die Nut kreisbogenförmig und der Zapfen mit einem Übermaß gegenüber der Nut ebenfalls kreisbogenförmig ausgebildet werden. Zur Verbindung der beiden Lagerinnenteil-Konuselemente können auch andere, geeignete Verbindungselemente vorgesehen sein, so z. B. eine Passstiftverbindung.

Um sicherzustellen, dass die Elastomerschicht bei zusammengefügten Lagerinnenteil-Konuselementen im Bereich der Elastomer-Mittenzylinderform durchgehend und spaltfrei ausgebildet ist, soll die Elastomerschicht in diesem Bereich der Elastomer-Mittenzylinderform wenigstens mit einem Teilbereich über die Randkante des Lagerinnenteil-Konuselements überstehen.

Mit den Merkmalen des Anspruchs 13 wird erreicht, dass beim Einpressen des vormontierten Bauteils in das Lagergehäuse bereits eine radiale Vorspannung in der Elastomerschicht des Elastomerzwischenbereichs aufgebracht werden kann. Dies erfolgt durch ein Zusammenziehen der im Außendurchmesser vor dem Einpressen größeren Außenschalen in das Lagergehäuse. Die Außenschalen können dabei relativ stabile Außenschalen mit einem oder mehreren Längsschlitzen sein. Alternativ kann anstelle solcher stabiler Außenschalen ggf. auch ein biegeweiches, gerolltes sowie ggf. längsgeschlitztes Rohr verwendet werden, das sich an den geringeren Innendurchmesser des Lagergehäuses anpasst.

Gemäß Anspruch 14 wird die axiale Vorspannung in an sich bekannter Weise zwischen einer Lagergehäuseschulter und einem Seegering im Lagergehäuse aufgebracht.

Nach Anspruch 15 werden vorteilhaft an der Kante der Einpressseite des Lagergehäuses sowie ggf. an einer gehäuseinneren Kante einer Seegeringnut Einlaufschrägen als Fasen angebracht, um eine Beschädigung der Außenkontur der Außenschalen zu vermeiden und zudem die Seegeringnut frei von einem Abrieb durch den Einpressvorgang zu halten.

Weiter kann gemäß Anspruch 16 vorgesehen sein, dass die Außenschale an radial gegenüberliegenden Bereichen jeweils eine in einer axialen Draufsicht vorzugsweise winkelsegmentförmige Außenschalen-Aussparung aufweist, die entsprechend den Elastomer-Aussparungen zugeordnet sind. Die Außenschale ist im Bereich des Elastomer-Konusbereichs radial umlaufend ausgebildet. Derartige auf die Elastomer-Aussparungen abgestimmte Aussparungen erleichtern z. B. die Formherstellung.

Vorzugsweise wird bei den vorstehenden Ausführungsformen ein relativ flacher Konuswinkel von 15° bis 30°, vorzugsweise 22,5°, verwendet.

Zur Befestigung des Lagerinnenteils können an sich bekannte, seitlich angeformte Pratzen verwendet werden. Vorzugsweise wird das Lagerinnenteil jedoch rohrförmig ausgebildet und mit einem durchgehenden Bolzen beispielsweise an einem Fahrzeugaufbau befestigt.

Ein erfindungsgemäßes Gelenklager ist zur Lagerung eines Achslenkers geeignet, insbesondere eines geschmiedeten oder gegossenen, weitgehend biege- und verdrehsteifen, achsseitig festen Längslenkers für eine Vorderachse eines Nutzfahrzeugs.

Anhand einer Zeichnung wird die Erfindung näher erläutert.

Es zeigen:
- Fig. 1: im wesentlichen eine schematische Ansicht einer als Anlagefläche ausgebildeten Stirnseite eines Lagerinnenteil-Konuselements eines zweigeteilten Lagerinnenteils,
- Fig. 2: eine schematische Draufsicht auf ein Lagerinnenteil-Konuselement mit aufvulkanisierter Elastomerschicht und darauf angehafteter Außenschale,
- Fig. 3: eine schematische Seitenansicht eines Lagerinnenteil-Konuselements,
- Fig. 4: eine vergrößerte Detaildarstellung der Einzelheit C aus Fig. 3,
- Fig. 5: eine vergrößerte Detaildarstellung der Einzelheit D aus Fig. 3,
- Fig. 6: eine schematische, axiale Draufsicht auf eine vordere Endseite eines Lagerinnenteil-Konuselements mit anvulkanisierter Elastomerschicht und angehafteter Außenschale sowie mit radial gegenüberliegenden, winkelsegmentförmigen Aussparungen,
- Fig. 7: eine vergrößerte Detaildarstellung der Einzelheit V aus Fig. 6,
- Fig. 8: eine schematische Schnittansicht entlang der Linie B-B der Fig. 9,
- Fig. 9: eine schematische Schnittansicht entlang der Linie A-A der Fig. 6,
- Fig. 10: eine vergrößerte Detaildarstellung der Einzelheit X aus Fig. 9,
- Fig. 11: eine vergrößerte Detaildarstellung der Einzelheit Y aus Fig. 9,
- Fig. 12: eine schematische Draufsicht auf ein Zwischenrohr,
- Fig. 13: eine schematische Vorderansicht des Zwischenrohrs nach Fig. 12,
- Fig. 14: eine vergrößerte Detaildarstellung der Einzelheit D aus Fig. 12,
- Fig. 15: eine schematische Seitenansicht des Zwischenrohrs gemäß Fig. 12,
- Fig. 16: eine schematische Seitenansicht eines vormontierten Lagerbauteils, bei dem zwei als Gleichteile ausgebildete Lagerinnenteil-Konuselemente miteinander verbunden sind,
- Fig. 17: eine schematische Schnittansicht durch ein Lagergehäuse eines montierten Gelenklagers, und
- Fig. 18: eine vergrößerte Detaildarstellung der Einzelheit X aus Fig. 17.

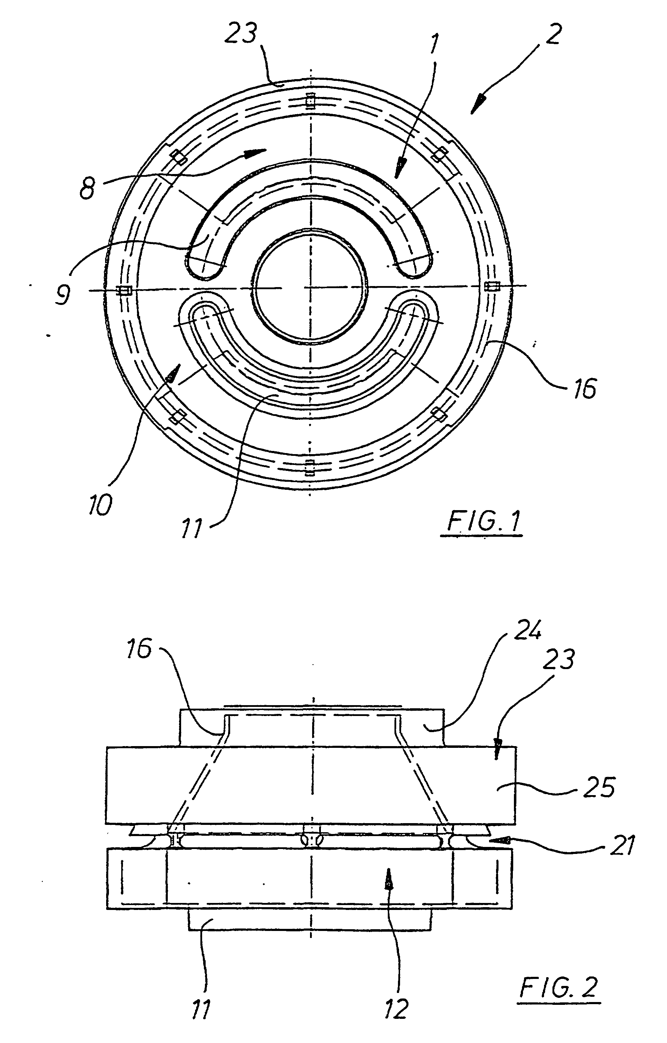

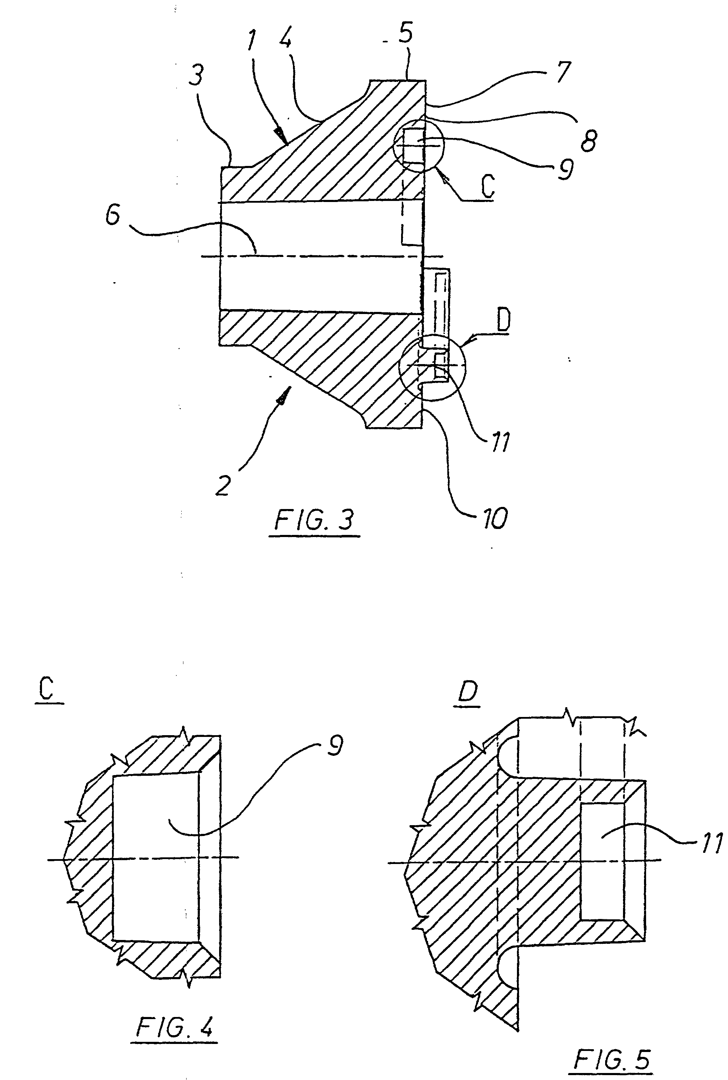

In der Fig. 1 ist schematisch im wesentlichen ein Lagerinnenteil-Konuselement 1 eines zweigeteilten Lagerinnenteils 2 dargestellt. Dieses Lagerinnenteif-Konuselement 1 ist in der Fig. 3 in einer Seitenansicht dargestellt. Das Lagerinnenteil 2 besteht aus zwei als Gleichteile ausgebildeten Lagerinnenteil-Konuselementen 1, die jeweils eine Lagerinnenteil-Seitenzylinderform 3, einen Lagerinnenteil-Konusbereich 4 und eine Lagerinnenteil-Mittenzylinderform 5 aufweisen. Die Trennebene zwischen den beiden Lagerinnenteil-Konuselementen 1, von denen hier aus Übersichtlichkeitsgründen lediglich eines dargestellt ist, verläuft quer zur Längsachse 6 des Lagerinnenteils 2 und damit quer zur Längsachse der Lagerinnenteil-Konuselemente 1.

Wie dies aus den Fig. 1 und 3 weiter ersichtlich ist, sind die Lagerinnenteil-Konuselemente 1 an einander zugeordneten Stirnseiten 7 durch eine Steckverbindung miteinander verdrehsicher und radial abstützbar verbindbar. Dazu ist an den einander zugeordneten Stirnseiten 7 jeweils in einer ersten Stirnseitenhälfte 8 eine kreisbogenförmig ausgebildete Nut 9 und radial gegenüberliegend an einer zweiten Stirnseitenhälfte 10 als Gegenstück zu dieser Nut 9 ein kreisbogenförmig ausgebildeter Zapfen 11 ausgebildet. Um zwei Lagerinnenteil-Konuselemente 1 miteinander verbinden zu können, werden diese um 180° gegeneinander verdreht, so dass jeweils ein Zapfen 11 einer Nut 9 zugeordnet ist. Die Nut-Zapfen-Paarung ist, wie dies insbesondere aus den Fig. 4 und 5 schematisch ersichtlich ist, die jeweils eine vergrößerte Darstellung der Einzelheit C bzw. D der Fig. 3 zeigen, leicht konisch bzw. mit einem Übermaß des Zapfens 11 gegenüber der Nut 9 ausgebildet, damit die beiden Lagerinnenteil-Konuselemente 1 mit einem Presssitz miteinander verdrehsicher und radial abgestützt verbindbar sind.

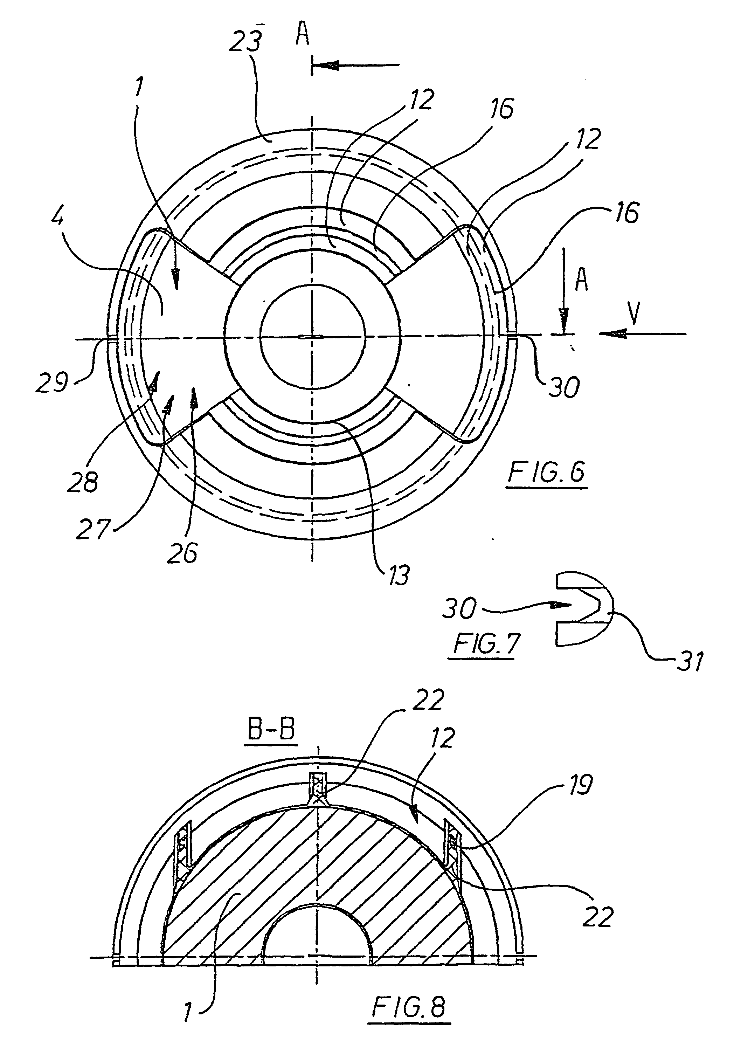

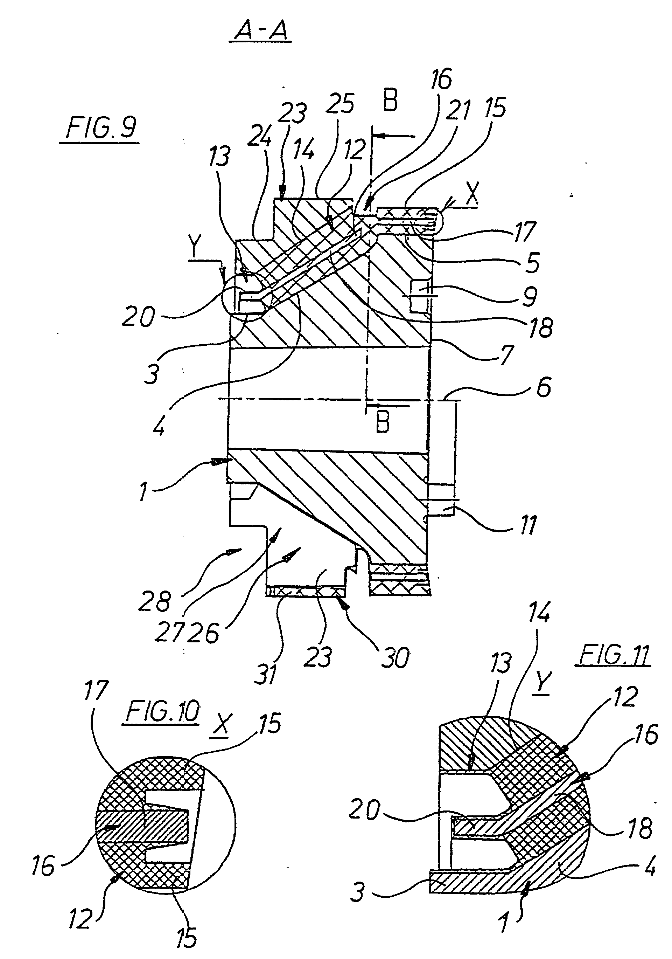

Wie dies aus der Fig. 6 in Verbindung mit der Fig. 9 weiter ersichtlich ist, ist auf jedes der Lagerinnenteil-Konuselemente 1 je eine Elastomerschicht 12 direkt aufvulkanisiert. Wie dies insbesondere aus der Fig. 9 ersichtlich ist, weist diese Elastomerschicht 12 eine Elastomer-Seitenzylinderform 13, einen Elastomer-Konusbereich 14 und eine Elastomer-Mittenzylinderform 15 auf.

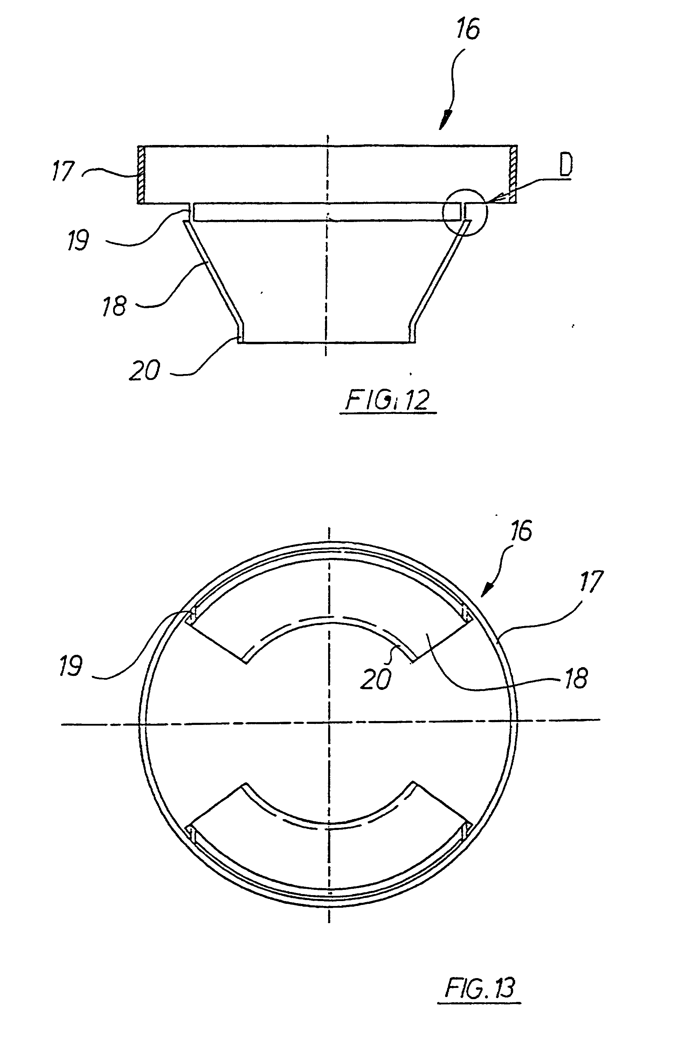

In den Fig. 10 und 11 ist jeweils eine vergrößerte Detaildarstellung der Einzelheiten X und Y, die jeweils den endseitigen Bereich der Elastomerschicht 12 zeigen, dargestellt.

Wie dies aus der Fig. 10 ersichtlich ist, steht die Elastomerschicht 12 im Bereich der Elastomer-Mittenzylinderform 15 endseitig mit einem Teilbereich über die Randkante des Lagerinnenteil-Konuselements 1 über, wodurch sichergestellt ist, dass bei einer Verbindung zweier Lagerinnenteil-Konuselemente 1 zu einem Lagerinnenteil 2, die im Längsmittenbereich aneinandergrenzenden, endseitigen Elastomerschichten 12 spaltfrei aneinanderliegen. Die in der Fig. 11 dargestellten Freiräume im Bereich der Elastomer-Seitenzylinderform 13 ermöglichen, dass bei einer radialen und axialen Verspannung der Bauteile gegeneinander das Elastomermaterial, z. B. ein Gummimaterial, dorthin ausweichen kann.

Wie dies aus der Fig. 9 weiter ersichtlich ist, ist in die Elastomerschicht 12 ein seiner Kontur folgendes Zwischenrohr 16 eingeformt, das Relativbewegungen in der Elastomerschicht 12 stabilisiert. Das Zwischenrohr 16 ist in den Fig. 12 bis 15 als einzelnes Bauteil in unterschiedlichen Ansichten dargestellt.

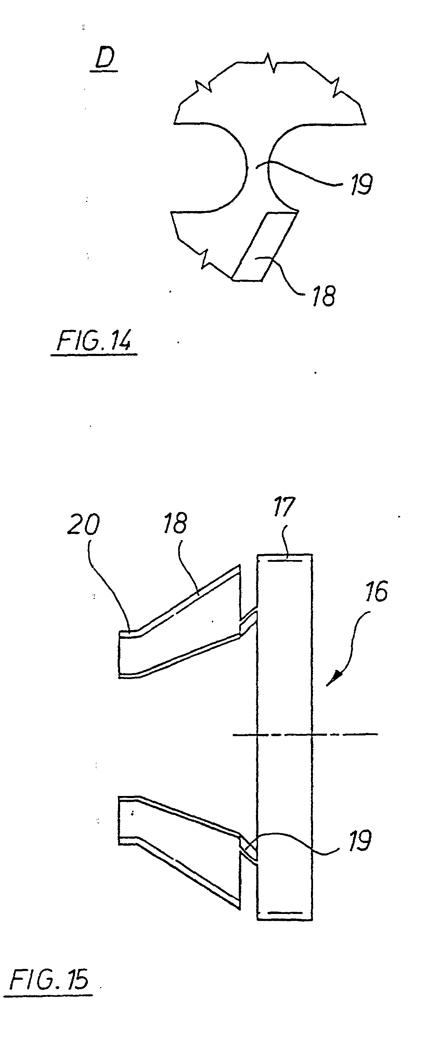

In der Fig. 12 ist eine Draufsicht auf das Zwischenrohr 16 dargestellt, aus dem ersichtlich ist, dass der Übergangsbereich zwischen einer Zwischenrohr-Mittenzylinderform 17 und einem Zwischen-Konusbereich 18 durch dünne Verbindungsstege 19 gebildet ist. Diese Verbindungsstege 19 halten die einzelnen Zwischenrohrteile während der gesamten Vulkanisationsvorbereitung zusammen und dürfen bzw. sollen bei der Montage oder während des Betriebs brechen, ohne dass hierdurch die Funktion des Lagers beeinträchtigt werden würde. In der Fig. 14 ist eine vergrößerte Detaildarstellung eines der Verbindungsstege 19 gezeigt. An den Zwischenrohr-Konusbereich 18 schließt sich schließlich eine Zwischenrohr-Seitenzylinderform 20 an.

Wie dies aus der Fig. 9 weiter ersichtlich ist, ist im Übergangsbereich zwischen der Elastomer-Mittenzylinderform 15 und dem Elastomer-Konusbereich 14 eine radial umlaufende Elastomernut 21 ausgebildet. Diese Elastomernut 21 ist insbesondere auch aus der Fig. 2 ersichtlich, die eine Draufsicht auf eine auf ein Lagerinnenteil-Konuselement 1 aufvulkanisierte Elastomerschicht 12 zeigt. In der Fig. 8 ist ein Schnitt entlang der Linie B-B der Fig. 9 gezeigt, aus dem ersichtlich ist, dass im Bereich der Elastomernut 21 ferner Elastomerstege 22 ausgebildet sind, in denen teilweise Verbindungsstege 19 einvulkanisiert sind.

Der Fig. 9 kann weiter entnommen werden, dass an der Außenkontur des Elastomer-Konusbereichs 14 und der Elastomer-Seitenzylinderform 13 eine stabile Außenschale 23 anvulkanisiert ist, die eine zylindrische Außenform aufweist. Der der Elastomer-Seitenzylinderform 13 zugeordnete Außenschalenbereich 24 weist einen geringeren Außendurchmesser auf als der dem Elastomer-Konusbereich 14 zugeordnete Außenschalenbereich 25. Die Außenschale 23 ist mit einer Innenkontur jeweils an die Außenkontur des Elastomer-Konusbereichs 14 und der Elastomer-Seitenzylinderform 13 angepasst.

Wie dies aus der Fig. 9 weiter ersichtlich ist, weist die Außenschale 23 im Außenschalenbereich 25 ferner einen größeren Außendurchmesser auf als die Elastomer-Mittenzylinderform 15.

Wie dies der Fig. 6 in Verbindung mit Fig. 9 zudem entnommen werden kann, weist die Elastomerschicht im Elastomer-Konusbereich 14 und in der Elastomer-Seitenzylinderform 13 an radial gegenüberliegenden Bereichen jeweils eine in der Draufsicht winkelsegmentförmig ausgebildete Elastomer-Aussparung 26 auf. Ebenso weist das Zwischenrohr 16, wie dies insbesondere aus den Fig. 13 und 15 ersichtlich ist, an radial gegenüberliegenden Bereichen jeweils eine in der Draufsicht winkelsegmentförmig ausgebildete Zwischenrohraussparung 27 im Bereich der Zwischenrohr-Seitenzylinderform 20 und dem Zwischenrohr-Konusbereich 18 auf, die, wie dies insbesondere aus den Fig. 6 und 9 ersichtlich ist, jeweils den Elastomer-Aussparungen 26 zugeordnet sind.

Den Fig. 6 und 9 kann weiter entnommen werden, dass auch die Außenschale 23 an radial gegenüberliegenden Bereichen jeweils eine in der Draufsicht winkelsegmentförmige Außenschalen-Aussparungen 26 aufweist, die ebenfalls den Elastomer-Aussparungen 26 und damit den Zwischenrohr-Aussparungen 27 zugeordnet sind. Die Elastomer-Aussparungen 26 sind dabei lediglich im Außenschalenbereich 24 der Außenschale 23 ausgebildet, so dass die Außenschale 23 im Außenschalenbereich 25 radial umlaufend ausgebildet ist.

Wie dies den Fig. 6 und 9 weiter entnommen werden kann, weist die Außenschale 23 am Außenschalenbereich 25 in einem mittleren Bereich der Aussparungen 26, 27, 28 gesehen zwei gegenüberliegende, durchgehende Längsschlitze 29, 30 auf, die, wie dies insbesondere auch die vergrößerte Detaildarstellung der Einzelheit V der Fig. 7 zeigt, mit einem Elastomer-Füllmaterial 31 ausgefüllt sein können.

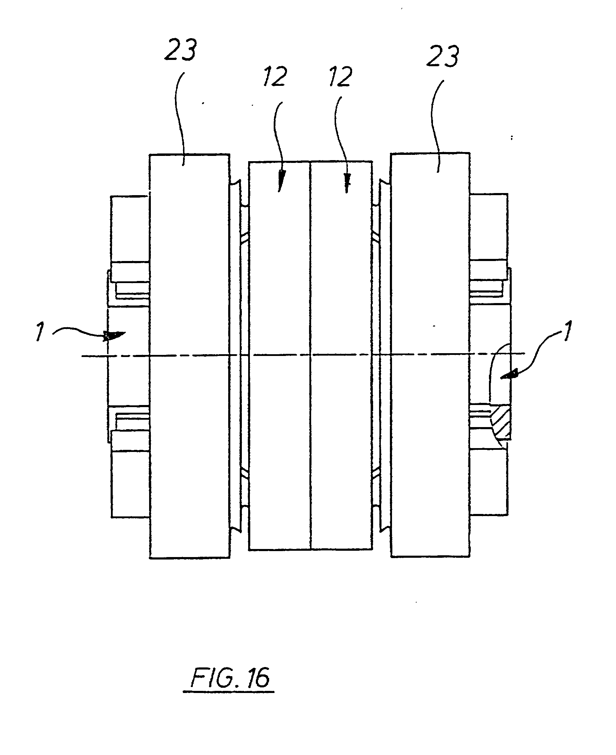

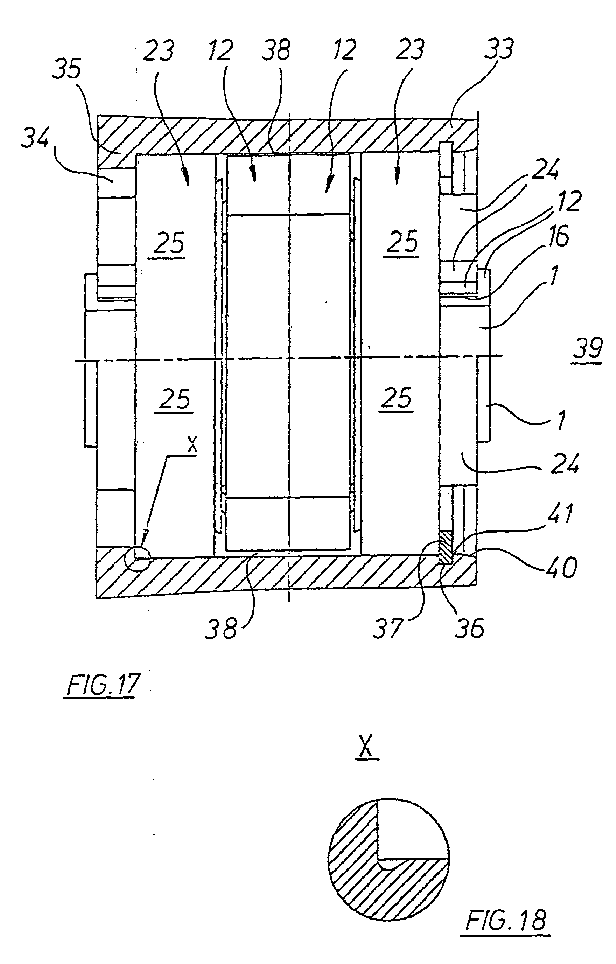

In der Fig. 16 sind zwei Lagerinnenteil-Konuselemente 1 zu einem Lagerinnenteil 2 zusammengefügt. Dieses Lagerbauteil wird, wie dies in der Fig. 17 schematisch dargestellt ist, zur Ausbildung eines Gelenklagers 32 in ein metallisches Lagergehäuse 33, das einen zylindrischen Innenraum 34 als Aufnahmeauge aufweist, eingepresst, wobei die Außenschalen 23 zur Aufbringung einer Vorspannung in der Elastomerschicht 12 axial zwischen einer im Lagergehäuse 33 seitlich radial nach innen abstehenden Schulter 35 und einem in eine seitlich gegenüberliegende Seegeringnut 36 eingesetzten Seegering 37 als Axial-Spannelemente axial verspannbar sind.

Der Außendurchmesser der Außenschalen 23 ist im Außenschalenbereich 25 größer als der Innendurchmesser des Lagergehäuses 33, so dass zur Aufbringung einer radialen Vorspannung das vormontierte Bauteil unter Reduzierung des Außendurchmessers und Schließen der Längsschlitze 29, 30 unter Erhöhung der Vorspannung in der Elastomerschicht 12 in das Lagergehäuse 33 eingepresst ist. Dabei wird, wie dies in der Fig. 17 schematisch dargestellt ist, zwischen der Außenkontur der Elastomer-Mittenzylinderform 15 und einem dieser zugeordneten Zylinderwandbereich des Innenraums 34 des Lagergehäuses 33 ein radial umlaufender Luftspalt 38 als freier Federweg ausgebildet. Dadurch erfolgt bei einer radialen Auslenkung in Richtung des Luftspalts 38, die größer als der Spaltabstand ist, ein Anschlag mit einem sprunghaften Anstieg der Federkennung.

Wie der Fig. 17 weiter entnommen werden kann, ist die Elastomer-Mittenzylinderform 15 und/oder der dieser zugeordnete Zylinderwandbereich des Lagergehäuse-Innenraums 34 so ausgebildet, dass Bereiche mit unterschiedlichen Spaltabständen zwischen der Elastomer-Mittenzylinderform 15 und dem Zylinderwandbereich ausbildbar sind. Beispielsweise beträgt der in der Fig. 17 dargestellte obere Spaltabstand ca. 0,5 mm, während der in der Fig. 17 untere Spaltabstand in etwa ca. 1,5 mm beträgt. Um den Einpressvorgang zu erleichtern ist, wie dies in der Fig. 17 ebenfalls gezeigt ist, an der Kante der Einpressseite 39 des Lagergehäuses 33 eine Einlaufschräge 40 als erste Fase und entsprechend eine zweite Einlaufschräge 41 als zweite Fase an der gehäuseinneren Kante der Seegeringnut 36 angebracht.

In der Fig. 17 ist in der oberen Zeichnungshälfte schematisch die Seitenansicht auf die ausgesparten Bereiche und in der unteren Zeichnungshälfte schematisch die Seitenansicht auf die nicht ausgesparten Bereiche dargestellt.

In der Fig. 18 ist schließlich eine vergrößerte Detaildarstellung der Einzelheit X aus Fig. 17 dargestellt.

Das Gelenklager 32 ist vorzugsweise zur Lagerung eines Achslenkers, vorzugsweise eines gegossenen, weitgehend biege- und verdrehsteifen, achsseitig festen Längslenkers für eine Vorderachse eines Nutzfahrzeugs eingesetzt.

## Patentansprüche

1. Gelenklager, insbesondere zur Lagerung von Achslenkem in Kraftfahrzeugen,
mit einem um eine Lagerachse rotationssymmetrischen, metallischen, vorzugsweise rohrförmigen Lagerinnenteil als erstem Lagerteil, das im wesentlichen eine ballige Verdickung als Doppel-Konus-Form aufweist mit Lagerinnenteil-Konusbereichen an gegenüberliegenden Endbereichen und mit einer Lagerinnenteil-Mittenzylinderform im Bereich der Längsmitte,
mit einem metallischen Lagergehäuse als zweitem Lagerteil, das einen zylindrischen Innenraum als Aufnahmeauge und Axial-Spannelemente aufweist,
mit einer Elastomerschicht, die zwischen dem Lagerinnenteil und dem Lagergehäuse unter Vorspannung angebracht ist dergestalt, dass Relativbewegungen molekular in der Elastomerschicht aufnehmbar sind,
**dadurch gekennzeichnet,**
**dass** das Lagerinnenteil (2) im Bereich der Lagerinnenteil-Mittenzylinderform (5) in einer quer zur Lagerinnenteil-Längsachse (6) verlaufenden Trennebene in zwei miteinander in einer Anlageverbindung fest und verdrehsicher verbindbare Lagerinnenteil-Konuselemente (1) geteilt ist, die vorzugsweise als Gleichteile ausgebildet sind und entsprechend jeweils einen Lagerinnenteil-Konusbereich (4) und eine Lagerinnenteil-Mittenzylinderform (5) aufweisen,
**dass** die Elastomerschicht (12) jeweils einen direkt an die Lagerinnenteil-Konusbereiche (4) angehafteten, vorzugsweise anvulkanisierten Elastomer-Konusbereich (14) und einen auf der Lagerinnenteil-Mittenzylinderform (5) angehafteten, vorzugsweise anvulkanisierten Elastomer-Anschlag (15) umfasst,
**dass** zudem an der Außenkontur jedes Elastomer-Konusbereichs (14) eine stabile Außenschale (23) angehaftet, vorzugsweise anvulkanisiert, ist, die eine zylindrische Außenform aufweist und mit einer Innenkontur an die Außenkontur des Elastomer-Konusbereichs (14) angepasst ist,
**dass** die Außenschale (23) wenigstens mit dem Außenkontur-Teilbereich (25) formschlüssig in den zylindrischen Innenraum (34) des Lagergehäuses (33) eingepresst ist und zwischen der Außenkontur des Elastomer-Anschlags (15) und einem diesem zugeordneten Zylinderwandbereich des Lagergehäuse-Innenraums (34) wenigstens in Teilbereichen ein Luftspalt (38) als freier Federweg ausgebildet ist, so dass bei einer radialen Auslenkung in Richtung des Luftspalts (38) größer als der Spaltabstand ein Anschlag mit einem sprunghaften Anstieg der Federkennung erfolgt.

2. Gelenklager nach Anspruch 1, **dadurch gekennzeichnet, dass** der Elastomer-Anschlag als Elastomer-Mittenzylinderform (15) umlaufend auf der Lagerinnenteil-Mittenzylinderform (5) angebracht ist, wobei der Elastomer-Mittenzylinderform (15) ein umlaufender Luftspalt (38) zugeordnet ist.

3. Gelenklager nach Anspruch 2, **dadurch gekennzeichnet, dass** die Elastomer-Mittenzylinderform (14) und/oder der dieser zugeordnete Zylinderwandbereich des Lagergehäuse-Innenraums (34) so ausgebildet ist, dass Bereiche mit unterschiedlichen Spaltabständen zwischen der Elastomer-Mittenzylinderform (15) und dem Zylinderwandbereich ausbildbar sind.

4. Gelenklager nach Anspruch 2 oder Anspruch 3, **dadurch gekennzeichnet,**
**dass** die Elastomer-Mittenzylinderform (15) zumindest in Teilbereichen mit dem Elastomer-Konusbereich (14) verbunden ist, und
**dass** im Übergangsbereich zwischen der Elastomer-Mittenzylinderform (15) und dem Elastomer-Konusbereich (14) eine radial umlaufende Elastomernut (21) ausgebildet ist.

5. Gelenklager nach einem der Ansprüche 1 bis 4, **dadurch gekennzeichnet,**
**dass** an den beiden Endseiten der Lagerinnenteil-Konuselemente (1) eine jeweils gleiche seitliche Zylinderform als Lagerinnenteil-Seitenzylinderform (3) anschließend an den Lagerinnenteil-Konusbereich (4) vorgesehen ist, deren Durchmesser kleiner als der der Lagerinnenteil-Mittenzylinderform (5) ist, und
**dass** die Elastomerschicht (12) vorzugsweise eine an der Lagerinnenteil-Seitenzylinderform (3) angehaftete, vorzugsweise anvulkanisierte Elastomer-Seitenzylinderform (13) aufweist, die vorzugsweise mit dem Elastomer-Konusbereich (14) verbunden ist.

6. Gelenklager nach einem der Ansprüche 1 bis 5, **dadurch gekennzeichnet, dass** die Elastomerschicht (12) im Elastomer-Konusbereich (14) und ggf. in einer Elastomer-Seitenzylinderform (13) an radial gegenüberliegenden Bereichen jeweils eine in einer axialen Draufsicht winkelsegmentförmige Elastomer-Aussparung (26) aufweist.

7. Gelenklager nach einem der Ansprüche 1 bis 6, **dadurch gekennzeichnet, dass** die Elastomerschicht (12) durch wenigstens ein seiner Kontur folgendes, eingeformtes Zwischenrohr (16) mehrlagig, vorzugsweise zweilagig, mit jeweils in etwa gleicher Schichtdicke ausgebildet ist.

8. Gelenklager nach Anspruch 7, **dadurch gekennzeichnet, dass** der Übergangsbereich zwischen einer Zwischenrohr-Mittenzylinderform (17) und einem Zwischenrohr-Konusbereich (18) durch dünne Verbindungsstege (19) gebildet ist.

9. Gelenklager nach Anspruch 7 oder Anspruch 8, **dadurch gekennzeichnet, dass** wenigstens in der Zwischenrohr-Mittenzylinderform (17) wenigstens eine Materialschwächung als Sollbruchstelle vorgesehen ist, die vorzugsweise durch eine Ausnehmung und/oder einen durchgehenden Schlitz gebildet ist.

10. Gelenklager nach einem der Ansprüche 7 bis 9, **dadurch gekennzeichnet, dass** sich das Zwischenrohr (16) in etwa über die axiale Länge der Elastomerschicht (12) erstreckt und an radial gegenüberliegenden Bereichen jeweils eine in der Draufsicht vorzugsweise winkelsegmentförmige Zwischenrohr-Aussparung (27) in einem Zwischenrohr-Konusbereich (18) sowie gegebenenfalls in einer Zwischenrohr-Seitenzylinderform (20) aufweist, die in der Elastomerschicht (12) ausgebildeten winkelsegmentförmigen Elastomer-Aussparungen (26) entsprechend zugeordnet sind.

11. Gelenklager nach einem der Ansprüche 1 bis 10, **dadurch gekennzeichnet, dass** die Lagerinnenteil-Konuselemente (1) an den einander zugeordneten Stirnseiten (7) als Anlageflächen durch eine Reibschluss- und/oder Formschlussverbindung, vorzugsweise eine Steckverbindung, verdrehsicher und radial abgestützt verbindbar sind, wobei der axiale Zusammenhalt durch die Axial-Spannelemente (35, 36, 37) erfolgt.

12. Gelenklager nach Anspruch 11, **dadurch gekennzeichnet,**
**dass** jedes Lagerinnenteil-Konuselement (1) an den einander zugeordneten Stirnseiten (7) in einer ersten Stirnseitenhälfte (8) wenigstens eine Nut (9) aufweist und radial gegenüberliegend an einer zweiten Stirnseitenhälfte (10) wenigstens einen Zapfen (11) als Gegenstück zu dieser Nut (9) aufweist dergestalt,
**dass** zwei Lagerinnenteil-Konuselemente (1) um 180° gegeneinander verdreht durch die wenigstens eine Nut-Zapfen-Paarung (9, 11) vorzugsweise mit einem Presssitz zu einem Lagerinnenteil (2) verbindbar sind.

13. Gelenklager nach einem der Ansprüche 1 bis 12, **dadurch gekennzeichnet,**
**dass** die Außenschalen (23) jeweils einen, vorzugsweise zwei gegenüberliegende, durchgehende Längsschlitze (29, 30) aufweisen oder die Außenschalen (23) aus einem biegeweichen, gerollten, gegebenenfalls längsgeschlitztem Rohr hergestellt sind, und
**dass** dabei im Vormontagezustand der Außendurchmesser der Außenschalen (23) größer als der Innendurchmesser des Lagergehäuses (33) ist, so dass die Lagerinnenteil-Konuselemente (1) unter Reduzierung des Außendurchmessers, Schließen des oder der Längsschlitze (29, 30) und Erhöhung der Vorspannung in der Elastomerschicht (12) in das Lagergehäuse (33) einpressbar sind.

14. Gelenklager nach einem der Ansprüche 1 bis 13, dadurch gekennzeichnet, dass das durch Verbindung zweier Lagerinnenteil-Konuselemente (1) ausgebildete Lagerbauteil in das Lagergehäuse (33) einsetzbar und die Außenschalen (23) zur Aufbringung einer Vorspannung in der Elastomerschicht (12) axial verspannbar sind, wobei die axiale Verspannung zwischen den Axial-Spannelementen als einer im Lagergehäuse (33) seitlich radial nach innen abstehenden Schulter (35) und einem in eine seitlich gegenüberliegende Seegeringnut (36) eingesetzten Seegering (37) erfolgt.

15. Gelenklager nach einem der Ansprüche 1 bis 14, **dadurch gekennzeichnet, dass** an der Kante der Einpressseite (39) des Lagergehäuses (33) eine Einlaufschräge (40) als erste Fase und gegebenenfalls entsprechend eine zweite Einlaufschräge (41) als zweite Fase an der gehäuseinneren Kante einer Seegeringnut (36) angebracht sind.

16. Gelenklager nach einem der Ansprüche 1 bis 15, **dadurch gekennzeichnet,**
**dass** die Außenschale (23) an radial gegenüberliegenden Bereichen jeweils eine in einer axialen Draufsicht vorzugsweise winkelsegmentförmige Außenschalen-Aussparung (28) aufweist, die in der Elastomerschicht (12) ausgebildeten Elastomer-Aussparungen (26) zugeordnet sind, und
**dass** die Außenschale (23) vorzugsweise im Bereich des Elastomer-Konusbereichs (14) radial umlaufend ausgebildet ist.

## Claims

1. Articulated bearing, in particular for the mounting of axle guides in motor vehicles, with a metallic, preferably tubular bearing inner part, as a first bearing part, which is rotationally symmetrical about a bearing axis and which has essentially a crowned thickening as a double-cone shape, with bearing inner part cone regions at opposite end regions and with a bearing inner part centre cylinder shape in the region of a longitudinal centre, with a metallic bearing housing, as a second bearing part, which has a cylindrical inner space as a receiving lug and axial tension elements, with an elastomeric layer which is applied under pretension between the bearing inner part and the bearing housing, in such a way that relative movements can be absorbed molecularly in the elastomeric layer, **characterized in that** a bearing inner part (2) is divided in the region of the bearing inner part centre cylinder shape (5), in a parting plane running transversely to the bearing inner part longitudinal axis (6), into two bearing inner part cone elements (1) which can be connected to one another in a bearing connection firmly and fixedly in terms of rotation and which are designed preferably as identical parts and correspondingly have in each case a bearing inner part cone region (4) and a bearing inner part centre cylinder shape (5), **in that** the elastomeric layer (12) comprises in each case an elastomeric cone region (14) directly bonded, preferably vulcanized, onto the bearing inner part cone regions (4) and an elastomeric stop (15) bonded, preferably vulcanized, to the bearing inner part centre cylinder shape (5), **in that**, moreover, a stable outer shell (23) is bonded, preferably vulcanized, on the outer contour of each elastomeric cone region (14), the said outer shell having a cylindrical outer shape and being adapted with an inner contour to the outer contour of the elastomeric cone region (14), and **in that** the outer shell (23) is pressed at least with an outer contour part-region (25) positively into the cylindrical inner space (34) of the bearing housing (33), and an air gap (38), as a free spring excursion, is formed, at least in part-regions, between the outer contour of the elastomeric stop (15) and a cylinder wall region, assigned to the latter, of the bearing housing inner space (34), so that, in the event of radial deflection in the direction of the air gap (38) which is greater than the gap clearance, a stop with an abrupt rise in the spring characteristic occurs.

2. Articulated bearing according to Claim 1, **characterized in that** the elastomeric stop is applied as an elastomeric centre cylinder shape (15) peripherally on the bearing inner part centre cylinder shape (5), a peripheral air gap (38) being assigned to the elastomeric centre cylinder shape (15).

3. Articulated bearing according to Claim 2, **characterized in that** the elastomeric centre cylinder shape (14) and/or the cylinder wall region, assigned to the latter, of the bearing housing inner space (34) are/is designed in such a way that regions with different gap clearances can be formed between the elastomeric centre cylinder shape (15) and the cylinder wall region.

4. Articulated bearing according to Claim 2 or Claim 3, **characterized in that** the elastomeric centre cylinder shape (15) is connected at least in part-regions to the elastomeric cone region (14), and **in that** a radially peripheral elastomeric groove (21) is formed in the transitional region between the elastomeric centre cylinder shape (15) and the elastomeric cone region (14).

5. Articulated bearing according to one of Claims 1 to 4, **characterized in that** an identical lateral cylinder shape, as a bearing inner part lateral cylinder shape (3), is provided in each case on the two end faces of the bearing inner part cone elements (1), adjacently to the bearing inner part cone region (4), the diameter of the said lateral cylinder shape being smaller than that of the bearing inner part centre cylinder shape (5), and **in that** the elastomeric layer (12) preferably has an elastomeric lateral cylinder shape (13) which is bonded, preferably vulcanized, on the bearing inner part lateral cylinder shape (3) and which is preferably connected to the elastomeric cone region (14).

6. Articulated bearing according to one of Claims 1 to 5, **characterized in that** the elastomeric layer (12) has in the elastomeric cone region (14) and, if appropriate, in an elastomeric lateral cylinder shape (13), at radially opposite regions, in each case an elastomeric cutout (26) which, in an axial top view, is in the form of an angular segment.

7. Articulated bearing according to one of Claims 1 to 6, **characterized in that** the elastomeric layer (12) is of multi-layered, preferably two-layered design, in each case with an approximately identical layer thickness, by means of at least one integrally formed intermediate tube (16) which follows the contour of the said elastomeric layer.

8. Articulated bearing according to Claim 7, **characterized in that** the transitional region between an intermediate tube centre cylinder shape (17) and an intermediate tube cone region (18) is formed by thin connecting webs (19).

9. Articulated bearing according to Claim 7 or Claim 8, **characterized in that**, at least in the intermediate tube centre cylinder shape (17), at least one material weakening, at a predetermined breaking point, is provided, which is preferably formed by a recess and/or a continuous slot.

10. Articulated bearing according to one of Claims 7 to 9, **characterized in that** the intermediate tube (16) extends approximately over the axial length of the elastomeric layer (12) and at radially opposite regions has in each case an intermediate tube cutout (27), preferably in the form of an angular segment in a top view, in an intermediate tube cone region (18) and, if appropriate, in an intermediate tube lateral cylinder shape (20), the said intermediate tube cutouts being assigned correspondingly to elastomeric cutouts (26) which are formed in the elastomeric layer (12) and are in the form of an angular segment.

11. Articulated bearing according to one of Claims 1 to 10, **characterized in that** the bearing inner part cone elements (1) can be connected on the end faces (7) assigned to one another, as bearing surfaces, fixedly in terms of rotation and in a radially supported manner by means of a non-positive and/or positive connection, preferably a plug connection, axial retention taking place by means of the axial tension elements (35, 36, 37).

12. Articulated bearing according to Claim 11, **characterized in that** each bearing inner part cone element (1) has, on the end faces (7) assigned to one another, at least one groove (9) in a first end face half (8) and, radially opposite, on a second end face half (10), at least one tongue (11) as a counterpiece to this groove (9), in such a way that two bearing inner part cone elements (1) can be connected, rotated through 180º relative to one another, by means of the at least one groove/tongue pairing (9, 11), preferably with a press fit, to form a bearing inner part (2).

13. Articulated bearing according to one of Claims 1 to 12, **characterized in that** the outer shells (23) have in each case one, preferably two opposite continuous longitudinal slots (29, 30) or the outer shells (23) are produced from a flexurally soft, rolled and, if appropriate, longitudinally slotted tube, and **in that** in this case, in the premounting state, the outside diameter of the outer shells (23) is greater than the inside diameter of the bearing housing (33), so that the bearing inner part cone elements (1) can be pressed into the bearing housing (33), at the same time with a reduction in the outside diameter, the closing of the longitudinal slot or longitudinal slots (29, 30) and an increase in the prestress in the elastomeric layer (12).

14. Articulated bearing according to one of Claims 1 to 13, **characterized in that** the bearing component formed as a result of the connection of two bearing inner part cone elements (1) can be inserted into the bearing housing (33) and the outer shells (23) can be braced axially in order to apply a prestress in the elastomeric layer (12), the axial bracing between the axial tension elements taking place in the form of a shoulder (35) laterally projecting radially inwards in the bearing housing (33) and a Seeger ring (37) inserted into a laterally opposite Seeger ring groove (36).

15. Articulated bearing according to one of Claims 1 to 14, **characterized in that** a run-in slope (40), as a first chamfer, is formed at the edge of the press-in side (39) of the bearing housing (33) and, if appropriate, a second run-in slope (41), as a second chamfer, is formed correspondingly at the housing-inner edge of a Seeger ring groove (36).

16. Articulated bearing according to one of Claims 1 to 15, **characterized in that** the outer shell (23) has, at radially opposite regions, in each case an outer shell cutout (28) which, in an axial top view, is preferably in the form of an angular segment, the said outer shell cutouts being assigned to elastomeric cutouts (26) formed in the elastomeric layer (12), and **in that** the outer shell (23) is designed to be radially peripheral preferably in the region of the elastomeric cone region (14).

## Revendications

1. Palier à rotule, en particulier pour le montage de guides d'essieu de véhicules,
avec une partie intérieure de palier métallique, de préférence tubulaire, à symétrie de rotation autour d'un axe de palier, comme première partie de palier, qui présente essentiellement un épaississement convexe comme forme à double cône avec des zones coniques de la partie intérieure de palier dans des zones d'extrémité opposées et avec une forme de cylindre de référence de la partie intérieure de palier dans la zone du centre longitudinal,
avec un logement de palier métallique comme seconde partie de palier qui comporte un espace intérieur cylindrique comme oeillet de logement et des éléments tendeurs axiaux,
avec une couche d'élastomère qui est placée sous précontrainte entre la partie intérieure de palier et le logement de palier de telle manière que les mouvements relatifs peuvent être absorbés de manière moléculaire dans la couche d'élastomère,
**caractérisé en ce que**
la partie intérieure de palier (2) dans la zone de la forme de cylindre de référence (5) de la partie intérieure de palier est séparée, dans un plan de séparation s'étendant perpendiculairement à l'axe longitudinal (6) de la partie intérieure de palier, en deux éléments coniques (1) de la partie intérieure de palier raccordables l'un à l'autre de manière fixe et de manière à résister à la torsion par un assemblage de contact qui sont configurés, de préférence, comme des parties identiques et qui comportent de manière correspondante respectivement une zone conique (4) de partie intérieure de palier et une forme de cylindre de référence (5) de partie intérieure de palier,
la couche d'élastomère (12) comprend respectivement une zone d'élastomère conique (14), de préférence une zone d'élastomère conique vulcanisée (14), adhérant directement aux zones coniques (4) de partie intérieure de palier et une butée d'élastomère (15), de préférence vulcanisée, adhérant à la forme de cylindre de référence (5) de la partie intérieure de palier,
en outre, une enveloppe externe stable (23), de préférence vulcanisée, qui présente une forme externe cylindrique et dont le contour interne est adapté au contour externe de la zone d'élastomère conique (14), adhère au contour externe de chaque zone d'élastomère conique (14),
l'enveloppe externe (23) avec au moins la zone partielle du contour externe (25) est enfoncée de manière solidaire dans l'espace cylindrique (34) du logement de palier (33) et une fente d'aération (38) est formée au moins dans des zones partielles comme débattement libre entre le contour externe de la butée d'élastomère (15) et une zone de paroi de cylindre de l'espace intérieur du logement de palier (34) associé à celle-ci, de sorte que, en cas de déviation radiale dans la direction de la fente d'aération (38) plus grande que l'écartement de la fente, il se produit une butée avec une augmentation discontinue de la caractéristique de flexibilité.

2. Palier à rotule selon la revendication 1, **caractérisé en ce que** la butée d'élastomère est montée circulairement comme forme de cylindre de référence d'élastomère (15) sur la forme de cylindre de référence (5) de la partie intérieure de palier, une fente d'aération circulaire (38) étant associée à la forme de cylindre de référence d'élastomère (15).

3. Palier à rotule selon la revendication 2, **caractérisé en ce que** la forme de cylindre de référence d'élastomère (15) et/ou la zone de paroi de cylindre de l'espace intérieur du logement de palier (34) associé à celle-ci est configurée de telle manière que des zones ayant des écartements de fente différents peuvent être formées entre la forme de cylindre de référence d'élastomère (15) et la zone de paroi de cylindre.

4. Palier à rotule selon la revendication 2 ou la revendication 3, **caractérisé en ce que**
la forme de cylindre de référence d'élastomère (15) est raccordée à la zone conique d'élastomère (14) au moins dans des zones partielles, et
une rainure d'élastomère circulaire dans le sens radial (21) est formée dans la zone de transition entre la forme de cylindre de référence d'élastomère (15) et la zone conique d'élastomère (14).

5. Palier à rotule selon l'une quelconque des revendications 1 à 4, **caractérisé en ce que**
aux deux extrémités des éléments coniques (1) de la partie intérieure de palier, il est prévu une forme cylindrique latérale identique comme forme cylindrique latérale de la partie intérieure de palier (3) raccordée à la zone conique (4) de partie intérieure de palier, dont le diamètre est plus petit que celui de la forme de cylindre de référence (5) de la partie intérieure de palier, et
la couche d'élastomère (12) comporte, de préférence, une forme cylindrique latérale d'élastomère (13), de préférence vulcanisée, adhérant à la forme cylindrique latérale de la partie intérieure de palier (3) qui est, de préférence, raccordée à la zone conique d'élastomère (14).

6. Palier à rotule selon l'une quelconque des revendications 1 à 5, **caractérisé en ce que** la couche d'élastomère (12) dans la zone conique d'élastomère (14) et, éventuellement, dans une forme cylindrique latérale d'élastomère (13), comporte dans chacune des zones opposées radialement un évidement d'élastomère (26) en forme de segment angulaire en vue de dessus axiale.

7. Palier à rotule selon l'une quelconque des revendications 1 à 6, **caractérisé en ce que** la couche d'élastomère (12) est formée par au moins un tube entretoise (16) moulé qui suit son contour, à plusieurs couches, de préférence deux couches, avec chacune à peu près la même épaisseur de couche.

8. Palier à rotule selon la revendication 7, **caractérisé en ce que** la zone de transition entre une forme de cylindre de référence de tube entretoise (17) et une zone conique de tube entretoise (18) est formée par des nervures de raccordement minces (19).

9. Palier à rotule selon la revendication 7 ou la revendication 8, **caractérisé en ce que**, au moins dans la forme de cylindre de référence de tube entretoise (17), il est prévu au moins une réduction de matière comme point destiné à la rupture qui est formée, de préférence, par un creux et/ou une fente continue.

10. Palier à rotule selon l'une quelconque des revendications 7 à 9, **caractérisé en ce que** le tube entretoise (16) s'étend à peu près sur la longueur axiale de la couche d'élastomère (12) et comporte, dans chacune des zones opposées radialement, un évidement de tube entretoise (27) de préférence en forme de segment angulaire en vue de dessus dans une zone conique de tube entretoise (18) ainsi que, éventuellement, dans une forme cylindrique latérale de tube entretoise (20), qui sont associés de manière appropriée à des évidements d'élastomères (26) en forme de segment angulaire formés dans la couche d'élastomère (12).

11. Palier à rotule selon l'une quelconque des revendications 1 à 10, **caractérisé en ce que** les éléments coniques (1) de la partie intérieure de palier sont raccordables aux côtés frontaux (7) conjugués comme surfaces d'appui, de manière à résister à la torsion et soutenus radialement, par un raccord par friction et/ou à engagement positif, de préférence un raccord enfichable, la cohésion axiale étant assurée par les éléments tendeurs axiaux (35, 36, 37).

12. Palier à rotule selon la revendication 11, **caractérisé en ce que**
chaque élément conique (1) de la partie intérieure de palier sur les côtés frontaux conjugués (7) comporte au moins une rainure (9) dans une première moitié de côté frontal (8) et comporte au moins un tourillon (11), à l'opposé dans le sens radial, dans une seconde moitié de côté frontal (10) comme pendant de cette rainure (9), de telle manière que
deux éléments coniques (1) de la partie intérieure de palier sont raccordables selon une torsion de 180° l'un par rapport à l'autre par le au moins un appariement rainure-tourillon (9, 11), de préférence avec un ajustage serré, pour former une partie intérieure de palier (2).

13. Palier à rotule selon l'une quelconque des revendications 1 à 12, **caractérisé en ce que**
les enveloppes externes (23) comportent respectivement une, de préférence deux, fentes longitudinales opposées, continues (29, 30) ou les enveloppes externes (23) sont fabriquées à partir d'un tube souple, cintré, éventuellement fendu longitudinalement, et
à l'état pré-monté, le diamètre extérieur des enveloppes externes (23) est plus grand que le diamètre intérieur du logement de palier (33), de sorte que les éléments coniques (1) de la partie intérieure de palier peuvent être enfoncés dans le logement de palier (33) en réduisant le diamètre extérieur, en fermant la fente longitudinale ou les fentes longitudinales (29, 30) et en augmentant la précontrainte dans la couche d'élastomère (12).

14. Palier à rotule selon l'une quelconque des revendications 1 à 13, **caractérisé en ce que** le composant de palier formé par le raccordement de deux éléments coniques (1) de la partie intérieure de palier peut être inséré dans le logement de palier (33) et les enveloppes externes (23) peuvent être tendues axialement pour appliquer une précontrainte dans la couche d'élastomère (12), la tension axiale entre les éléments tendeurs axiaux se produisant comme un épaulement (35) faisant saillie vers l'intérieur latéralement radialement dans le logement de palier (33) et un anneau de retenue (37) inséré dans une rainure pour anneau de retenue (36) opposée latéralement.

15. Palier à rotule selon l'une quelconque des revendications 1 à 14, **caractérisé en ce que**, sur l'arête du côté d'enfoncement (39) du logement de palier (33), une inclinaison d'entrée (40) est prévue comme premier chanfrein et, éventuellement de manière appropriée, une seconde inclinaison d'entrée (41) est prévue comme second chanfrein sur l'arête intérieure du logement d'une rainure pour anneau de retenue (36).

16. Palier à rotule selon l'une quelconque des revendications 1 à 15, **caractérisé en ce que**
l'enveloppe externe (23) comporte dans chacune des zones opposées radialement un évidement d'enveloppe externe (28) de préférence en forme de segment angulaire en vue de dessus axiale qui sont associés à des évidements d'élastomères (26) formés dans la couche d'élastomère (12), et
l'enveloppe externe (23) est configurée circulairement dans le sens radial de préférence dans la zone de la zone d'élastomère conique (14).
